# EUROPÄISCHE PATENTSCHRIFT

(11) **EP 1 577 002 B1**
(45) Veröffentlichungstag und Bekanntmachung des Hinweises auf die Patenterteilung: **11.11.2009**
(21) Anmeldenummer: 05005534.2
(22) Anmeldetag: 15.03.2005
(51) Int. Cl.: B01J 8/18

(54) **Wirbelschichtreaktor mit einem Ringspalt**
Fluidized bed reactor with an annular gap
Réacteur à lit fluidisé avec une fente annulaire

(30) Priorität: 16.03.2004 DE 102004013019
(43) Veröffentlichungstag der Anmeldung: 21.09.2005
(60) Teilanmeldung: 09010587.5
(73) Patentinhaber: Zimmer, Sebastian, 61267 Neu-Anspach (DE)
(72) Erfinder: Zimmer, Sebastian, 61267 Neu-Anspach (DE)
(74) Vertreter: Hebing, Norbert

(56) Entgegenhaltungen:
- US-A- 4 387 667
- US-A- 4 518 750

## Beschreibung

Die Erfindung bezieht sich auf einen Wirbelschichtreaktor mit einer wirbelkammer und einem Gaseintritt und einem Gasauslass.

Gaseintritt und Gasauslass sind ggf. mit mehreren Anschlussleitungen verbunden.

Beim Betrieb eines solchen Reaktors bildet sich in der Wirbelkammer eine sogenannte Wirbelschicht. Darunter versteht man ein Gas-/Feststoffgemisch, das sich in einem turbulenten Zustand befindet. Aufgrund der Turbulenzen in der Wirbelschicht findet eine optimale Mischung zwischen den in die Wirbelkammer eingebrachten Feststoffen, Gasen und Flüssigkeiten statt, wodurch ein optimaler Stoffübergang bzw. Adsorption erfolgen kann.

Für verschiedene chemische Prozesse werden klassische Wirbelschicht-, zirkulierende Wirbelschicht- oder sogenannte rückströmende zirkulierende Wirbelschichtreaktoren eingesetzt. Diese Reaktoren werden zumeist von unten nach oben von einem Gas durchströmt und bestehen nach dem Gaseintritt aus einer Einschnürung, die entweder aus einem Wirbelboden (Lochboden), einem Düsenboden, einer Einzeldüse oder einer Mehrfachdüse besteht. Im Bereich der Einschnürung soll die Gasgeschwindigkeit so hoch sein, dass die darüber befindlichen Feststoffe nicht durchfallen können. Oberhalb der Einschnürung befindet sich die Wirbelkammer, die zylindrisch, konisch oder abschnittweise zunächst konisch und dann zylindrisch ausgeführt ist. Oberhalb der Wirbelkammer befindet sich meist in der Seitenwand des Reaktors ein zur Seite gerichtetes Gasaustrittsrohr. Andere Ausführungen sehen ein nach oben gerichtetes, zentrisch angeordnetes Gasaustrittsrohr vor.

Der Nachteil der bekannten wirbelschichtreaktor-Konstruktionen besteht im Wesentlichen darin, dass es bei wechselnden Gasmengen, die z. B. von vorgeschalteten Anlagen bewirkt werden, häufig zu Veränderungen in der Wirbelschicht kommt, die die Effizienz des Verfahrens verschlechtert und/oder den Betrieb der z. B. vorgeschalteten Anlage nachhaltig stört.

Als Gegenmaßnahmen werden Gasrezirkulationen (Gasrückführungen) vorgesehen oder zusatzluft dem Gasstrom beigemischt, so dass die minimale Gasmenge, die den Reaktor durchströmt, meist nicht unter 70% - 80% der Volllastmenge sinkt. Da seitens der anknüpfenden Anlagen häufig Schwankungen der Gasmengen von 30% - 100% möglich sind bzw. gewünscht werden, wird für die Stabilisierung der Verfahren (Anhebung der Gasmenge auf 70% - 80%) ein erheblicher Energie- und Apparateaufwand betrieben.

In dem US-Patent 4,387,667 wird vorgeschlagen, in den Düsen des Gasverteilers eines wirbelschichtreaktors bewegliche Einbauten vorzusehen, die sich selbsttätig an die Gasdurchtrittsgeschwindigkeit anpassen und dadurch die Gasdurchtrittsfläche in den Düsen vergrößern.

Ziel der Erfindung ist es daher, einen wirbelschichtreaktor zu schaffen, dessen Wirbelschicht, mit nahezu gleichbleibenden Parametern (im Besonderen der Gasgeschwindigkeit) betrieben und durch entsprechende Dimensionierung des Reaktors auch bei unterschiedlichen Gasmengen (z. B. 30% - 70%) optimal eingestellt werden kann.

Erfindungsgemäß besteht die Wirbelkammer des Reaktors 1 aus einem konischen oder parabolischen Gehäuse 3, in dem sich ein ebenfalls konischer oder parabolischer Einbau 4 befindet. Hierdurch entsteht ein als Wirbelkammer fungierender Ringspalt 2 zwischen Gehäuse 3 und Einbau 4, der je nach Geometrie beider Komponenten eine über die Höhe gleichbleibende, eine zunehmende oder abnehmende Geschwindigkeit der Gasströmung verursacht. Ein solcher Reaktor kann daher auch als Konstant-Ringspaltreaktor bezeichnet werden.

Durch Absenken oder Anheben des Einbaus 4 in Richtung des Doppelpfeiles 5 in der Wirbelkammer kann die Gasgeschwindigkeit erhöht oder reduziert werden. Wenn sich die Gasmenge, die dem Reaktor zugeführt wird, verändert, kann somit durch Absenken oder Anheben des Einbaus eine annähernd konstante Strömungsgeschwindigkeit im Ringspalt 2 erzielt werden.

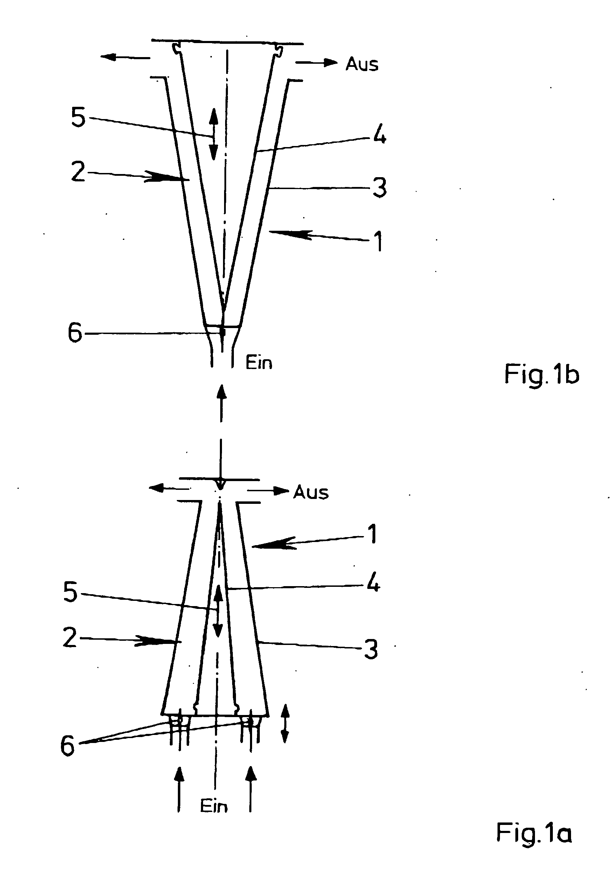

Der Ringspalt 2 kann sowohl so realisiert werden, dass sich die Querschnitte der Wirbelkammer von unten nach oben gesehen vergrößern als auch verkleinern (siehe Fig. 1a bzw. 1b)

Durch die Erfindung werden die bisher bekannten aufwändigen Gegenmaßnahmen überflüssig. Ferner werden durch die Erfindung in weiten Lastbereichen stabile Betriebsbedingungen hergestellt, wie sie normalerweise nur bei konstanten Gasdurchsätzen möglich sind. Die Beeinflussung der vor- oder nachgeschalteten Anlagen durch die Nutzung eines Konstant-Ringspaltreaktors wird minimiert.

Realisiert wird ein Ringspalt-Wirbelschichtreaktor, der es durch seine erfindungsgemäßen Geometrie und Einbauten ermöglicht, den Betrieb von Wirbelschichtverfahren im besonderen bei veränderbaren Gasmengen, die durch den wirbelschichtreaktor geführt werden, optimal zu gestalten, wodurch nennenswerte negative Einflüsse auf vor- oder nachgeschaltete Anlagenteile vermieden werden. Darüber hinaus werden Verfahren geschützt, die den erfindungsgemäßen Konstant-Wirbelschichtreaktor nutzen.

Ein weiteres Problem besteht darin, dass sich bei "Rückströmenden zirkulierenden Wirbelschichten" sowie bei wirbelschichten, die nicht mit konstanter Gasdurchströmung betrieben werden, sich je nach Lastbereich Agglomerate bilden, die innerhalb der wirbelkammer zumeist wandläufig nach unten sinken bzw. fallen. Wenn die Agglomerate in den Bereich der Einschnürung gelangen, werden sie durch die hohe Gasströmung zerrissen, wodurch es zu erheblichen Druckstößen kommen kann. Im Besonderen bei Lastbereichen < 70% - 80% der maximalen Gasmenge können diese Druckstöße zu erheblichen Störungen des Anlagenbetriebes führen, wodurch ein ordnungsgemäßer Betrieb der Anlage verhindert wird.

Zur Lösung des Problems sieht die Erfindung einen Agglomeratabscheider 10 vor, der als Ringspaltöffnung 11 oder durch eine Vielzahl versetzter Öffnungen am Umfang der Wirbelkammer eines Wirbelschichtreaktors oder als ein im Zentrum des Reaktors befindlicher Austrag ausgebildet ist.

Die Öffnungen können sich in der konischen Erweiterung der Wirbelkammer, direkt am Übergang zwischen der konischen Erweiterung und dem zylindrischen Teil, im zylindrischen Teil eines konventionellen Wirbelschichtreaktors, an beliebiger Stelle des Düsenbodens sowie an beliebiger Stelle der Außenwand oder des Innenkonus eines Ringspaltreaktors befinden.

Beschrieben wird somit ein Agglomeratabscheider, der wirbelschichtreaktoren derart optimiert, dass Agglomerate nicht innerhalb der wirbelkammer bis auf den Düsenboden fallen können, sondern vielmehr vorher seitlich z. B. in eine Ringwanne 10a abgeleitet werden, sowie ein Austrag, mit dem ggf. auf den Düsenboden gefallene Agglomerate abgezogen werden können- Für Wirbelschichtverfahren, die im Besonderen mit unterschiedlichen Lasten betrieben werden, führt die Erfindung zu stabileren Betriebsbedingungen, und die Beeinflussung der anknüpfenden Anlagen wird erheblich reduziert.

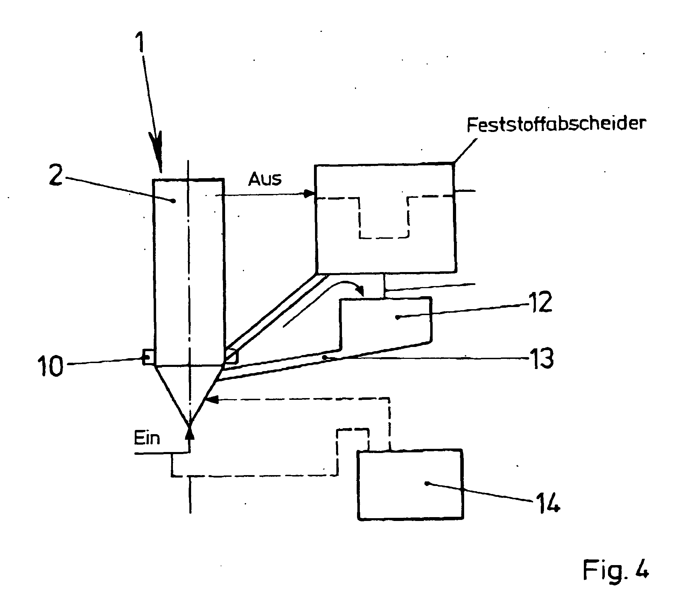

Die Funktion des Agglomeratabecheiders ist es, die rückströmenden Agglomerate und Konglomerate aus der wirbelkammer 2 abzuführen. Diese Feststoffe können sodann wieder mit Hilfe von geregelten oder ungeregelten Zuteilern in die Wirbelschicht eingebracht werden. In der Fig. 4 ist ein solcher Agglomeratabscheider mit einer Ringspaltöffnung 11 dargestellt. Hier werden die Feststoffe einer Schwimmwanne 12 zugeführt, aus der sie sodann dem wirbelschichtreaktor wieder, z. B. gleichmäßig am Umfang über eine Leitung 13 verteilt, geregelt (Steuerung 14) zugeführt werden können.

Durch die Erfindung wird der bisher betriebene Aufwand reduziert. Ferner werden durch die Erfindung in weiten Lastbereichen stabilere Betriebsbedingungen hergestellt, wie sie normalerweise nur in einem engeren Lastbereich (Gasdurchsätzen) möglich sind. Die Beeinflussung der vor- oder nachgeschalteten Anlagen durch die Nutzung eines Agglomeratabscheiders werden minimiert.

Bei konventionellen Reaktorkopf-Konstruktionen erfolgt die Ableitung des feststoffbeladenen Gases zentral nach oben oder seitlich in eine Richtung. Da das Gas in der Regel in diesem Bereich jedoch eine höhere Kernströmung hat als an anderen Stellen im Reaktor, bilden sich hier sogenannte walzenströmungen aus die zu einer wandläufigen Rückströmung innerhalb des Reaktors führen. Bei dem Prinzip eines zentrischen Austritts nach oben ist diese Walzenströmung gleichmäßig, es kann jedoch zu einer Anreicherung von Feststoff kommen, der dann als Agglomerat wandläufig absinkt. Bei einem einseitigen seitlichen Austritt wird die Anreicherung teilweise vermieden und auch die Walzenbildung ist nicht so ausgeprägt, aber die Gasströmung ist inhomogen und es kommt lokal verstärkt zur Agglomeratbildung. Vorgenannte Effekte sollen durch die Erfindung vermieden werden. Ergänzend zu dieser Erfindung wird der Konstant-Ringaustritt in Verbindung mit einem Gasleitkegel geschützt, der die Ableitung des Gas-/Feststoffgemisches noch weiter verbessert.

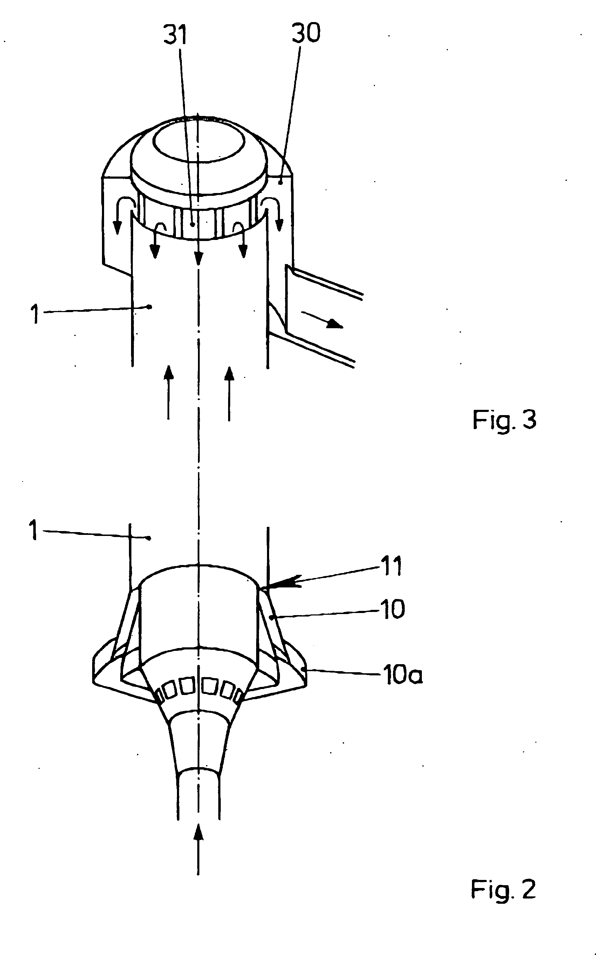

Zur Lösung des Problems sieht die Erfindung vor, dass durch ringförmig angeordnete Austrittsöffnungen 30 (siehe Fig. 3), die vorzugsweise gleichmäßig am Umfang des Reaktors 1 verteilt sind, das produktbeladene Gas in radialer Richtung und dann ggf. nach unten abgeführt wird. Feststoffe, die in der Kernströmung zum Reaktorkopf gelangen, werden auf dem kürzesten Wege und vor allem in alle Richtungen (radial) gleichmäßig abgeführt. Hierdurch wird die Bildung von Agglomeraten sowie die Größe der sich bildenden Agglomerate reduziert. Für wirbelschichtverfahren, die im Besonderen mit unterschiedlichen Lasten (Gasdurchsätzen) betrieben werden, führt die Erfindung zu stabileren Betriebsbedingungen und die Beeinflussung der anknüpfenden Anlagen wird erheblich reduziert.

Der Konstant-Ringaustritt kann mit einem Gasleitkegel 31 versehen sein, der die Ableitung des Gas-/Feststoffgemisches noch weiter verbessert.

Im Folgenden soll anhand eines Ausführungsbeispieles die Erfindung näher erläutert werden. Es zeigen:
- Fig. 1a, 1b: zwei prinzipielle Ausgestaltungen eines Ringspalt-Wirbelschichtreaktvrs gemäß der Erfindung,
- Fig. 2: eine perspektivische Darstellung eines erfindungsgemäßen Gasaustritts,
- Fig. 3: einen erfindungsgemäßen Reaktor mit einem Agglomeratabscheider und
- Fig. 4: einen erfindungsgemäßen Reaktor mit einem nachgeschalteten Feststoffabscheider.

Gemäß Fig. 1 besteht die wirbelkammer eines Reaktors 1 aus einem konischen oder parabolischen Gehäuse 3, in dem sich ein ebenfalls konischer oder parabolischer Einbau 4 befindet. Hierdurch entsteht ein als Wirbelkammer fungierender Ringspalt 2 zwischen Gehäuse 3 und Einbau 4, der sich über die Höhe des Gehäuses 3 bzw. des Einbaus 4 erstreckt und der je nach Geometrie beider Komponenten eine über die Höhe gleichbleibende, eine zunehmende oder abnehmende Geschwindigkeit der Gasströmung verursacht. Ein solcher Reaktor kann daher auch als Konstant-Ringspaltreaktor bezeichnet werden.

Durch Absenken oder Anheben des Einbaus 4 in Richtung des Doppelpfeiles 5 mittels einer nicht näher dargestellten Verstelleinrichtung wird die Ringspaltgeometrie geändert und damit die Gasgeschwindigkeit in der Wirbelkammer erhöht oder reduziert. Wenn sich die Gasmenge, die dem Reaktor zugeführt wird, verändert, kann somit durch Absenken oder Anheben des Einbaus 4 eine annähernd konstante Strömungsgeschwindigkeit im Ringspalt 2 erzielt werden.

Der Ringspalt 2 kann sowohl so realisiert werden, dass sich die Querschnitte der wirbelkammer von unten nach oben gesehen vergrößern als auch verkleinern (siehe Fig. 1a bzw. 1b).

Der Reaktor besitzt gemäß der Erfindung einen Agglomeratabscheider 10, der als Ringspaltöffnung 11 oder durch eine Vielzahl versetzter Öffnungen am Umfang der Wirbelkammer eines Wirbelschichtreaktore oder als ein im Zentrum des Reaktors befindlicher Austrag ausgebildet ist.

Die Öffnungen des Agglomeratabscheiders 10 können sich in der konischen Erweiterung der Wirbelkammer, direkt am Übergang zwischen der konischen Erweiterung und einem zylindrischen Teil, im zylindrischen Teil eines konventionellen Wirbelschichtreaktors, an beliebiger Stelle des Düsenbodens sowie an beliebiger Stelle der Außenwand oder des Innenkonus eines Ringspaltreaktors befinden.

Der Agglomeratabscheider sorgt dafür, dass Agglomerate nicht innerhalb der Wirbelkammer bis auf den Düsenboden fallen, sondern vielmehr vorher seitlich z. B. in eine Ringwanne 10a abgeleitet werden. Reste des Agglomerats, die zu einem den Gaseintritt bildenden Düsenboden gelangen, werden mittels eines nicht näher dargestellten Austrages im Düsenboden abgezogen.

Die Funktion des Agglomeratabscheiders ist es, die rückströmenden Agglomerate und Konglomerate aus der Wirbelkammer 2 abzuführen. Diese Feststoffe können sodann wieder mit Hilfe von geregelten oder ungeregelten Zuteilern in die wirbelschicht eingebracht werden. In der Fig. 4 ist ein solcher Agglomeratabscheider mit einer Ringspaltöffnung dargestellt. Hier werden die Feststoffe einer Schwimmwanne 12 zugeführt, aus der sie sodann dem Wirbelschichtreaktor wieder, z. B. gleichmäßig am Umfang über eine Leitung 13 verteilt, geregelt (Steuerung 14) zugeführt werden können.

Dadurch werden in weiten Lastbereichen stabilere Betriebsbedingungen hergestellt, wie sie normalerweise nur in einem engeren Lastbereich (Gasdurchsätze) möglich sind. Die Beeinflussung der vor- oder nachgeschalteten Anlagen durch die Nutzung eines Agglomeratabacheiders wird minimiert.

In der Fig. 3 ist ein Reaktor mit ringförmig angeordneten Austrittsöffnungen 30 dargestellt, die vorzugsweise gleichmäßig am Umfang des Reaktors 1 verteilt sind, durch die das produktbeladene Gas in radialer Richtung und dann ggf. nach unten abgeführt wird. Feststoffe, die in der Kernströmung zum Reaktorkopf gelangen, werden auf dem kürzesten Wege und vor allem in alle Richtungen (radial) gleichmäßig abgeführt. Hierdurch wird die Bildung von Agglomeraten sowie die Größe der sich bildenden Agglomerate reduziert. Für wirbelschichtverfahren, die im Besonderen mit unterschiedlichen Lasten (Gasdurchsätzen) betrieben werden, führt die Erfindung zu stabileren Betriebsbedingungen und die Beeinflussung der anknüpfenden Anlagen wird erheblich reduziert.

Der Konstant-Ringaustritt kann mit einem Gasleitkegel 31 versehen sein, der die Ableitung des Gas-/Feststoffgemisches noch weiter verbessert.

## Patentansprüche

1. Wirbelschichtreaktor mit einer Wirbelkammer und einem Gaseintritt und einem Gasauslass, **dadurch gekennzeichnet, dass** die Wirbelkammer des Reaktors (1) aus einem zu einer vertikalen Achse konischen oder parabolischen Gehäuse (3) besteht, in dem sich ein ebenfalls zu der vertikalen Achse konischer oder parabolischer Einbau (4) befindet, so dass sich zwischen der inneren Mantelfläche des Gehäuses und der äußeren Mantelfläche des Einbaus ein die Wirbelkammer bildender Ringspalt (2) bildet, und dass Verstellmittel vorgesehen sind, um zur Veränderung der Ringspaltweite Gehäuse (3) und Einbau (4) in axialer Richtung zu verstellten, so dass sich bei unterschiedlichen Gasdurchsätzen annähernd gleiche Gasgeschwindigkeiten ergeben bzw. bei unveränderten Gasdurchsätzen veränderbare Gasgeschwindigkeiten in der Wirbelkammer und/oder dem Rest des Reaktors (1) einstellen lassen.

2. Wirbelschichtreaktor nach Anspruch 1, **dadurch gekennzeichnet, dass** der Gasaustritt als Ringspaltöffnung oder am Umfang verteilte Öffnungen (30) ausgeführt ist, wodurch das Gas gleichmäßig radial aus dem Reaktor (1) abgeführt wird.

3. Wirbelschichtreaktor nach Anspruch 1 oder 2, **dadurch gekennzeichnet, dass** die wirbelkammer eine Ringspaltöffnung (11) oder gleichmäßig am Umfang verteilte Öffnungen hat, der/die es ermöglicht/ermöglichen, dass rückströmende oder andere Feststoffe abgeleitet werden können.

4. Wirbelschichtreaktor nach einem der vorhergehenden Ansprüche, **dadurch gekennzeichnet, dass** sich unmittelbar über dem Düsenboden ein Austrag befindet, mit dem Agglommerate und Feststoffe zentral aus der Wirbelkammer ausgetragen werden können.

5. Wirbelschichtreaktor nach Anspruch 4, **dadurch gekennzeichnet, dass** der Gaseintritt aus einem Düsenboden besteht, bei dem eine beliebige Anzahl von einstellbaren Düsen vorhanden ist.

6. wirbelschichtreaktor nach einem der vorhergehenden Ansprüche, mit einem nachgeschalteten Feststoffabscheider beliebiger Bauart, **dadurch gekennzeichnet, dass** der Feststoffabscheider mit einem Behälter oder einer Schwimmwanne (12) verbunden ist, so dass der abgeschiedene Feststoff dort aufgefangen wird, und dass der Behälter oder die Schwimmwanne (12) mit dem Reaktor (1) verbunden ist, aus dem/der der Feststoff abgeführt und/oder in den Reaktor (1) zurückgeführt wird.

7. Wirbelschichtreaktor nach Anspruch 6, **dadurch gekennzeichnet, dass** der Behälter als Einheit mit dem Abscheider verbunden ist.

8. wirbelschichtreaktor nach mindestens einem der Ansprüche 1 bis 7, **dadurch gekennzeichnet, dass** der Feststoffabscheider derart geregelt wird, dass der Differenzdruck des Abscheiders bei geringer Gasdurchströmung niedrig ist und bei hoher Gasdurchströmung hoch ist.

9. Wirbelschichtreaktor nach mindestens einem der Ansprüche 1 bis 7, **dadurch gekennzeichnet, dass** der Auslass des Reaktors (1) einen kegelförmigen Einbau hat bzw. kegelförmig ausgeführt ist.

10. Wirbelschichtreaktor nach einem der vorhergehenden Ansprüche, **dadurch gekennzeichnet, dass** er zur Durchführung eines der folgenden Verfahren eingerichtet ist:
Reinigung von Rauchgasen von Feuerungs- oder Verbrennungsanlagen.
Reinigung von Gasgemischen beliebiger Art.
Verbrennung von Brennstoffen oder Abfällen innerhalb der Wirbelschicht.
Katalytische, adsorptive und/oder absorptive Prozesse.
Stoffumwandlung durch chemische Reaktionen zwischen den in der Wirbelschicht befindlichen Stoffen.

## Claims

1. A fluidized-bed reactor with a turbulence chamber and a gas inlet and a gas outlet, **characterized in that** the turbulence chamber of the reactor (1) consists of a housing (3) which is conical or parabolic to a vertical axis and in which an insert (4) is located which is also conical or parabolic to the vertical axis, so that between the inner lateral shell of the housing and the outer lateral shell of the insert an annular gap (2) is formed which forms the turbulence chamber and that adjusting means are provided in order to adjust the housing (3) and the insert (4) in axial direction for changing the annular gap width so that with different gas flow rates approximately identical gas velocities are achieved or with unchanged gas flow rates, changeable gas velocities can be set in the turbulence chamber and/or the remainder of the reactor (1).

2. The fluidized-bed reactor according to Claim 1, **characterized in that** the gas outlet is designed as an annular gap opening or openings (30) distributed on the circumference as a result of which the gas is evenly discharged radially from the reactor (1).

3. The fluidized-bed reactor according to Claim 1 or 2, **characterized in that** the turbulence chamber has an annular gap opening (11) or openings evenly distributed on the circumference which permit(s) backflowing solids or other solids to be removed.

4. The fluidized-bed reactor according to any one of the preceding claims, **characterized in that** directly above the nozzle base a discharge is located with which agglomerates and solids can be centrally discharged from the turbulence chamber.

5. The fluidized-bed reactor according to Claim 4, **characterized in that** the gas inlet consists of a nozzle base where an arbitrary number of adjustable nozzles are present.

6. The fluidized-bed reactor according to any one of the preceding claims with a solids separator of any design connected downstream, **characterized in that** the solids separator is connected with a receptacle or a floating trough (12) so that the separated solid is collected there and that the receptacle or the floating trough (12) is connected with the reactor (1) from which the solid is discharged and/or returned into the reactor (1).

7. The fluidized-bed reactor according to Claim 6, **characterized in that** the receptacle is connected with the separator as a unit.

8. The fluidized-bed reactor according to at least one of the Claims 1 to 7, **characterized in that** the solids separator is regulated in such a manner that the differential pressure of the separator is low when the gas flow rate is low and is high when the gas flow rate is high.

9. The fluidized-bed reactor according to at least one of the Claims 1 to 7, **characterized in that** the outlet of the reactor (1) has a cone-shaped insert or is of a conical design.

10. The fluidized-bed reactor according to any one of the preceding claims, **characterized in that** it is equipped for carrying out one of the following methods:
Cleaning of flue gases of firing or combustion systems.
Cleaning of gas mixtures of any type.
Combustion of fuels or wastes within the fluidized bed.
Catalytic, adsorptive and/or absorptive processes.
Converting substances by the chemical reaction between the substances present in the fluidized bed.

## Revendications

1. Réacteur à lit fluidisé comportant une chambre de turbulence et une entrée de gaz et une sortie de gaz, **caractérisé en ce que** la chambre de turbulence du réacteur (1) consiste en un boîtier conique ou parabolique (3) par rapport à un axe vertical et dans lequel se trouve un insert (4) également conique ou parabolique par rapport à l'axe vertical, de sorte qu'il se forme entre la surface d'enveloppe intérieure du boîtier et la surface d'enveloppe extérieure de l'insert une fente annulaire (2) constituant la chambre de turbulence et qu'il est prévu des moyens de réglage permettant de régler le boîtier (3) et l'insert (4) dans le sens axial afin de modifier la largeur de la fente annulaire, de sorte que, avec des débits de gaz différents, on obtient pratiquement les mêmes vitesses de gaz ou, avec des débits de gaz inchangés, des vitesses modifiables peuvent être réglées dans la chambre de turbulence et/ou le reste du réacteur (1).

2. Réacteur à lit fluidisé selon la revendication 1, **caractérisé en ce que** la sortie de gaz est réalisée sous forme d'une ouverture à fente annulaire ou d'ouvertures (30) réparties sur la circonférence, ce qui évacue le gaz radialement de manière homogène hors du réacteur (1).

3. Réacteur à lit fluidisé selon la revendication 1 ou 2, **caractérisé en ce que** la chambre de turbulence comporte une ouverture à fente annulaire (11) ou des ouvertures réparties régulièrement sur la circonférence qui permet ou permettent d'évacuer les matières solides refluant ou d'autres matières solides.

4. Réacteur à lit fluidisé selon une des revendications précédentes, **caractérisé en ce que**, directement au dessus du fond à buses, se trouve une décharge qui permet de décharger des agglomérats et des matières solides centralement de la chambre de turbulence.

5. Réacteur à lit fluidisé selon la revendication 4, **caractérisé en ce que** l'entrée de gaz consiste en un fond à buses dans lequel il y a n'importe quel nombre de buses réglables.

6. Réacteur à lit fluidisé selon une des revendications précédentes, comportant un séparateur de matières solides installé en aval de n' importe quel type de construction, **caractérisé en ce que** le séparateur de matières solides est relié à un récipient ou à un bac flottant (12), de sorte que la matière résiduelle enlevée y est récupérée et que le récipient ou le bac flottant (12) d'où la matière résiduelle est évacuée et/ou renvoyée dans le réacteur (1) est relié au réacteur (1).

7. Réacteur à lit fluidisé selon la revendication 6, **caractérisé en ce que** le récipient est relié en tant qu'unité au séparateur.

8. Réacteur à lit fluidisé selon au moins une des revendications 1 à 7, **caractérisé en ce que** le séparateur de matières solides est réglé de manière à ce que la pression différentielle du séparateur soit faible en cas de faible débit de gaz et élevée en cas de fort débit de gaz.

9. Réacteur à lit fluidisé selon au moins une des revendications 1 à 7, **caractérisé en ce que** la sortie du réacteur (1) comporte un insert de forme conique ou a une conformation conique.

10. Réacteur à lit fluidisé selon une des revendications précédentes, **caractérisé en ce qu'**il est aménagé pour réaliser un des procédés suivants :
épuration de gaz de fumée d' installations à foyers ou de combustion,
épuration de mélanges gazeux de tous types,
combustion de combustibles ou de déchets dans le lit fluidisé,
processus de catalyse, d'adsorption et/ou d'absorption,
transformation de substances par des réactions chimiques entre les substances se trouvant dans le lit fluidisé.
